# EUROPÄISCHE PATENTSCHRIFT

(11) **EP 3 319 923 B1**
(45) Veröffentlichungstag und Bekanntmachung des Hinweises auf die Patenterteilung: **11.08.2021**
(21) Anmeldenummer: 16734189.0
(22) Anmeldetag: 25.06.2016
(51) Int. Cl.: C04B 40/02, C04B 28/18, C04B 111/00

(54) **VERFAHREN ZUR BINDUNG VON KOHLENDIOXID**
METHOD FOR BINDING OF CARBON DIOXIDE
PROCEDE DE LIAISON DE DIOXYDE DE CARBONE

(30) Priorität: 06.07.2015 EP 15002019
(43) Veröffentlichungstag der Anmeldung: 16.05.2018
(73) Patentinhaber: HeidelbergCement AG, 69120 Heidelberg (DE)
(72) Erfinder: ITUL, Anca, 69115 Heidelberg (DE); BEN HAHA, Mohsen, 69117 Heidelberg (DE); SPENCER, Nicholas, 69254 Malsch (DE)
(74) Vertreter: Zellentin & Partner mbB Patentanwälte
(86) Internationale Anmeldenummer: PCT/EP2016/001108
(87) Internationale Veröffentlichungsnummer: WO 2017/005350

(56) Entgegenhaltungen:
- EP-A1- 0 085 910
- EP-A1- 2 801 557
- DE-B- 1 047 104
- JP-A- H11 130 560
- RU-C1- 2 068 829
- NAKAMURA M ET AL: "IMPROVEMENT OF FROST DURABILITY OF VINYLON FIBER REINFORCED CEMENT BOARD", JOURNAL OF THE CERAMIC SOCIETY OF JAPAN, INTERNATIONAL EDITION, FUJI TECHNOLOGY PRESS, TOKYO, JP, Bd. 104, Nr. 10, Oktober 1996 (1996-10), Seiten 990-993, XP000686251, ISSN: 0912-9200
- SHORT N R ET AL: "Preliminary investigations into the supercritical carbonation of cement pastes", JOURNAL OF MATERIALS SCIENCE, KLUWER ACADEMIC PUBLISHERS, BO, Bd. 36, Nr. 1, Januar 2001 (2001-01), Seiten 35-41, XP019209390, ISSN: 1573-4803, DOI: 10.1023/A:1004870204162

## Beschreibung

Die vorliegende Erfindung betrifft ein Verfahren, mit dem Kohlendioxid gebunden werden kann, und die Verwendung eines Quellen für CaO und SiO₂ enthaltenden, hydrothermal behandelten und getemperten Ausgangsmaterials zur Herstellung von Bauteilen oder als Mörtel oder Ortbeton durch Härten mit Kohlendioxid.

Die Emmission von Kohlendioxid hat in den letzten Jahrzehnten ständig zugenommen und wird von vielen für einen Klimawandel, vor allem eine steigende Durchschnittstemperatur, verantwortlich gehalten. Es gibt daher schon länger Bestrebungen, den Anstieg des Gehalts an Kohlendioxid in der Atmosphäre zu stoppen, idealerweise sogar den Gehalt zu senken.

Ein Vorschlag besteht darin, das von Kraftwerken und anderen Anlagen abgegebene Kohlendioxid in nützliche Produkte umzuwandeln, siehe z. B. US 8,114,367 B2, US 2006/0185560 A1, US 8,367,025 B2, US 2013/0112115 A1 und EP 2 511 003 A1. Der Ersatz von Zement durch ein Material, welches Kohlendioxid absorbiert, ist schon deshalb besonders interessant, weil gerade die Herstellung von Zement trotz mannigfaltiger Bemühungen und Erfolge immer noch sehr viel Kohlendioxid freisetzt.

DE1047104 B betrifft ein Verfahren zum Härten von Rohlingen für Hüttensteine, aber auch für andere Körper, die Bestandteile aus glashaltigen Schlackenmehlen enthalten

In US 8,114,367 B2 fehlt es jedoch an einer konkreten Beschreibung von geeigneten Materialien und ihrer Herstellung. Spätere Anmeldungen desselben Erfinders beschreiben Wollastonit, CaSiO₄ oder kurz CS, als Material, welches unter Bindung von Kohlendioxid erhärtet. Dessen Herstellung erfordert ein Brennen von geeignetem Ausgangsmaterial bei immerhin noch 1200 °C, wodurch sich die Einsparung an Kohlendioxid in Grenzen hält.

Alternative Belit-Zemente lassen sich beispielsweise durch hydrothermale Behandlung im Autoklaven bei 100 bis 300 °C und anschließendes Reaktionsmahlen (EP 2 243 754 A1) oder Tempern bei unter 500 °C (EP 2 676 943 A1) erhalten. Jedoch erhärten Belit-Zemente hydraulisch, binden also beim Erhärten kein Kohlendioxid.

Es besteht daher weiter die Aufgabe, Verfahren zum Binden von Kohlendioxid zu finden.

Überraschend wurde nun festgestellt, dass ein durch hydrothermale Behandlung und Tempern hergestelltes Material unter Bindung von Kohlendioxid erhärten kann.

Die obige Aufgabe wird daher durch ein Verfahren gelöst, bei dem man ein Ausgangsmaterial, welches Quellen für CaO und SiO₂ umfasst, in einem Autoklaven bei 50 bis 300 °C hydrothermal behandelt, das erhaltene Material bei 350 bis 600 °C tempert, zur Einstellung der Konsistenz Wasser oder andere Flüssigkeiten zufügt und das durch hydrothermale Behandlung und Tempern erhaltene Material zur Herstellung von Bauteilen in Formen gießt oder als Mörtel oder Ortbeton verarbeitet und durch Behandlung mit Kohlendioxid härtet, sowie durch die Verwendung gemäß Anspruch 20.

Es werden folgende in der Zementindustrie üblichen Abkürzungen verwendet: H - H₂O, C - CaO, A - Al₂O₃, F - Fe₂O₃, M - MgO, S - SiO₂ und $ - SO₃. Um die weitere Beschreibung zu vereinfachen werden zumeist Verbindungen in ihrer reinen Form angegeben, ohne explizite Angabe von Mischreihen / Substitution durch Fremdionen usw. wie sie in technischen und industriellen Materialien üblich sind. Wie jeder Fachmann versteht, kann die Zusammensetzung der in dieser Erfindung namentlich genannten Phasen, in Abhängigkeit vom Chemismus des Rohmehls und der Art der Herstellung, durch die Substitution mit diversen Fremdionen variieren, wobei solche Verbindungen ebenfalls in den Schutzbereich der vorliegenden Erfindung fallen und von der Angabe der reinen Phasen/Verbindungen umfasst sein sollen.

Das erfindungsgemäße Verfahren umfasst die hydrothermale Behandlung eines Ausgangsmaterials aus einem oder mehreren Rohstoffen, welche ausreichende Mengen CaO und SiO₂ bereitstellen. Dabei eignen sich einerseits reine bzw. im Wesentlichen reine Rohstoffe wie Calciumhydroxid oder -oxid und Quarzmehl oder Microsilica. Andererseits kann eine Vielzahl natürliche aber auch industrielle Materialien, wie zum Beispiel, aber nicht ausschließlich, Bauxit, Ton / Tonstein, kalzinierte Tone (z.B. Metakaolin), Basalte, Peridotite , Dunite, Ignimbrite, Aschen / Schlacken / Hüttensande hoher und geringer Qualität (in Bezug auf Mineralogie / Glasgehalt, Reaktivität, etc.), diverse Haldenmaterialien, Rot- und Braunschlämme, natürliche Sulfatträger, Entschwefelungsschlämme, Phosphogips, Rauchgasgips, Titanogips, Fluorogips, etc., in geeigneter Kombination als Ausgangsmaterial verwendet werden. Es fallen ebenfalls namentlich nicht genannte Stoffe / Stoffgruppen in den Schutzbereich, welche die chemischen Mindestanforderungen als potentielle Rohstoffe erfüllen. Bevorzugt werden Sekundärrohstoffe, also Neben- und Abfallprodukte, als Rohstoffe eingesetzt.

Besonders bevorzugt sind Rohstoffe, die zugleich SiO₂ und CaO enthalten, so dass das gewünschte molare Verhältnis Ca/Si bereits vorliegt. Ist das gewünschte Ca/Si-Verhältnis nicht vorhanden, so müssen die Rohstoffe vor der weiteren Behandlung bezüglich der chemischen Zusammensetzung durch Zugabe weiterer Reaktionspartner wie Ca- oder Si-haltiger Feststoffe auf ein geeignetes Ca:Si-Molverhältnis im Ausgangsmaterial, das in der Regel von 1,5 bis 2,5 beträgt, eingestellt werden. Hierfür eignen sich beispielsweise Portlandit Ca(OH)₂ oder gebrannter Kalk. In der Regel werden die Rohstoffe bzw. das Ausgangsmaterial bezüglich Korngrösse und Korngrössenverteilung durch mechanische oder thermische Behandlung optimiert, wobei die thermische Behandlung auch zu einer Optimierung der chemischen Zusammensetzung führen kann.

Ein großer Teil der Rohstoffe bringt zusätzlich zu Quellen für CaO und SiO₂ auch weitere Elemente wie Aluminium, Eisen, Magnesium und andere in die Ausgangsmaterialmischung ein. Diese weiteren Elemente werden als Fremdionen in die Phasen eingebaut oder bilden eigene Phasen aus. Sofern sie vorhanden sind, wird ein molares (Ca+Mg)/(Si+Al+Fe)-Verhältnis von 1 bis 3,5, ein molares Verhältnis Ca:Mg von 0,1 bis 100 und ein molares Verhältnis (Al+Fe)/Si von 100 bis 0,1 bevorzugt. Das molare Verhältnis der Summe von Calcium und Magnesium zur Summe von Silizium, Aluminium und Eisen soll vorzugsweise von 1,5 bis 2,5, besonders bevorzugt etwa 2, betragen. Das Verhältnis von Calcium zu Magnesium beträgt vorzugsweise von 0,2 bis 20, besonders bevorzugt von 0,5 bis 5. Das Verhältnis der Summe von Aluminium und Eisen zu Silizium beträgt für einen hohen Aluminiumgehalt bevorzugt von 100 bis 10, für einen mittleren Aluminiumgehalt von 1 bis 20 und für einen niedrigen Aluminiumgehalt von 0,01 bis 2. Bei der Berechnung werden auch diejenigen Anteile berücksichtigt, die sich inert verhalten.

In einer bevorzugten Ausgestaltung wird Feinkornmaterial als Ausgangsmaterial gewählt, dessen Größtkorn vorzugsweise höchstens 0,1 mm beträgt. Hierfür kommen insbesondere die feineren Kornfraktionen aus der Wiederaufbereitung von zementhaltigen Bindemitteln in Baustoffen wie Altbetonen und -zementen zum Einsatz. Ein feineres Ausgangsmaterial ist sowohl im Hinblick auf die Umsetzungsgeschwindigkeit vorteilhaft, als auch hinsichtlich des Aufwandes für die Mahlung des fertigen Materials zur Umsetzung mit Kohlendioxid. Bei entsprechend feinem Ausgangsmaterial kann eine Mahlung entbehrlich sein.

Während des Mischens der Rohstoffe oder in einem der anschließenden Prozessschritte erfolgt vorzugsweise eine Zugabe von zusätzlichen Elementen oder Oxiden in einer Menge von 0,1 bis 30 Gew.-%. Natrium, Kalium, Bor, Schwefel, Phosphor oder deren Kombination sind als diese zusätzlichen Elemente/Oxide, die auch zusammenfassend als Fremdoxide bezeichnet werden, bevorzugt. Hierfür eignen sich Alkali- und/oder Erdalkali-Salze und/oder Hydroxide, beispielsweise CaSO₄ • H₂O, CaSO₄ • ½ H₂O, CaSO₄, CaHPO₂ • 2H₂O, Ca₃P₂O₈, NaOH, KOH, MgSO₄, Na₂Al₂O₄, Na₃PO₄, K₃PO₄, Na₂[B₄O₅(OH)₄] • 8 H₂O usw. In einer bevorzugten Ausführungsform weist die Ausgangsmaterialmischung ein molares Verhältnis P/Si von etwa 0,05 und/oder S/Si von etwa 0,05 und/oder K/Ca von etwa 0,05 auf.

Die, ggfs. wie beschrieben vorbehandelte, Rohstoffmischung kann gegebenenfalls mit Kristallisationskeimen, die beispielsweise Calciumsilikathydrate, Portlandklinker, Hüttensand, Magnesiumsilikate, Calciumsulfat-aluminat(belit)zement, Wasserglas, Glaspulver etc. enthalten, versetzt, also geimpft werden. Die Reaktion kann hierbei durch Impfen mit von 0,01 - 30 Gew.-% verschiedener Calciumsilikat und Calciumsilikathydrat enthaltender Verbindungen, insbesondere mit α-2CaO·SiO₂·H₂O, Afwillit, Calciochondrodit, β-Ca₂SiO₄ und anderen Verbindungen, beschleunigt werden.

Die hergestellte Mischung der Rohstoffe, die ggf. wie oben beschrieben geimpft ist, wird anschließend einer hydrothermalen Behandlung im Autoklaven bei einer Temperatur von 100 bis 300 °C, bevorzugt von 150 °C bis 250 °C unterzogen. Hierbei werden bevorzugt ein Wasser/Feststoff-Verhältnis von 0,1 bis 100, bevorzugt von 2 bis 20, und Verweilzeiten von 0,1 bis 24 Stunden, bevorzugt von 1 bis 16 Stunden, gewählt. Der Druck während der hydrothermalen Behandlung hängt vor allem von der Temperatur ab und entspricht üblicherweise dem Dampfdruck von Wasser bei der gewählten Temperatur. Bei 150 °C sind ca. 4,75 bar, bei 200 °C etwa 15 bar, bei 250 °C etwa 40 bar und bei 300°C ca. 85,8 bar zu erwarten.

Eine bevorzugte Wärmequelle für die hydrothermale Behandlung sind Mikrowellen, hierbei wird der Autoklav mit einem Mikrowellengenerator kombiniert.

Das erhaltene Material umfasst vor allem Calciumsilikathydrate, und je nach Rohstoffen auch Calciumaluminathydrat oder Calciumaluminiumsilikathydrat oder Magnesiumsilikathydrat oder Calciummagnesiumsilikathydrat oder Magnesium(Aluminium, Eisen)silikathydrat oder Magnesium (Calcium, Aluminium, Eisen)silikathydrat und ggf. weitere Verbindungen und eignet sich bereits zur Umsetzung mit Kohlendioxid. Das Material enthält zumindest ein, normalerweise mehrere, der genannten Calcium- und/oder Magnesiumsilikat- bzw. aluminathydrate, typischerweise:
- 0,01 bis 100 Gew.-% α-C₂SH, verschiedene C-S-H Formen einschließlich Dellait und teilweise karbonatisierte C-S-H Phasen sowie amorphe und wenig kristalline Phasen davon
- 0 bis 80 Gew.-% Katoit, Si-Katoit, Fe-Katoit, auch als Mono- und Hemikarbonate sowie als amorphe und wenig kristalline Phasen
- 0 bis 80 Gew.-% Magnesium(Calcium, Aluminium, Eisen)silikate,
- silikathydrate sowie amorphe und wenig kristalline Phasen davon
- 0 bis 80 Gew.-% Aluminium- und/oder Eisensilikate und -silikathydrate sowie amorphe und wenig kristalline Phasen davon
- Spuren- und Nebenbestandteile wie Aluminium- / Eisenoxide und -hydroxide, C₂AS, CH, MgCO₃, Mg(OH)₂, Quarz und Calcit.
Bezeichnungen wie Magnesium(Aluminium, Eisen)silikathydrat und Magnesium(Calcium, Aluminium, Eisen)silikat bedeuten, dass es sich um ein Magnesiumsilikathydrat bzw. Magnesiumsilikat handelt, in welchem Magnesium teilweise durch Aluminium und/oder Eisen bzw. Calcium, Aluminium und/oder Eisen ersetzt sein kann, aber nicht muss. Die in Klammern angegebenen Elemente substituieren optional einzeln oder zusammen das vorangehende Element.

Anschließend wird das Produkt der hydrothermalen Behandlung getempert. Die Temperung erfolgt bei einer Temperatur von 350 °C bis 600°C. Hierbei betragen die Aufheizrate von 10 - 6000 °C/min, bevorzugt von 20 - 100 °C/min und besonders bevorzugt etwa 40 °C/min, und die Verweilzeit von 0,01 - 600 min, bevorzugt von 1 - 120 min und besonders bevorzugt von 5 - 60 min. Zur Senkung des Anteils an reaktionsträgerem γ-C₂S bewährt sich eine zusätzliche Haltezeit während des Aufheizens bei 400 - 440 °C von 1 - 120 min, bevorzugt von 10 - 60 min. Es findet kein Reaktionsmahlen statt.

Es ist möglich, das bei der hydrothermalen Behandlung erhaltene Produkt vor dem Tempern zu Mahlen. Der Mahlprozess kann sowohl am nassen als auch am getrockneten Zwischenprodukt erfolgen. Es wurde überraschend gefunden, dass eine Mahlung des Zwischenprodukts zu signifikant reaktiveren Endprodukten führt. Es findet jedoch kein Reaktionsmahlen statt, d.h. die zugeführte Mahlenergie wird so begrenzt, dass im wesentlichen keine chemischen oder mineralogischen Umwandlungen ausgelöst werden. Ziel der Mahlung ist eine Deagglomeration und eine Verbesserung des Kornbandes.

Beim Tempern wird in einer bevorzugten Ausführungsform das abgespaltene Wasser abgeführt, bevorzugt durch einen Gasstrom. Hierfür eignet sich ein Luftstrom, aber auch ein Inertgasstrom oder ein Unterdruck sowie ein großes Oberfläche/Volumenverhältnis.

Nach dem Tempern erhält man ein Produkt, welches typischer weise mindestens ein Calciumsilikat und mindestens eine röntgenamorphe Phase umfasst, sowie je nach Rohstoffen auch Calciumaluminat, Calciumaluminiumsilikat, Magnesium(calcium,aluminium,eisen)silikat und/oder Calciummagnesiumsilikat. In der Regel enthält das Produkt die folgenden Komponenten:
- 1 - 100 Gew.-% C₂S Polymorphe, als kristalline, wenig kristalline oder amorphe Phasen
- 0 - 30 Gew.-% Hydrate aus der hydrothermalen Behandlung,
- 0 - 95 Gew.-% reaktive Calciumaluminate, vorzugsweise in Form von kristallinem C₁₂A₇, oder von wenig kristallinen oder amorphen Aluminatphasen
- 0 - 80 Gew.-% Magnesium(Calcium, Aluminium, Eisen)silikate, als kristalline, wenig kristalline oder amorphe Phasen, die Fremdionen wie Fe, Al, Ca enthalten können
- 0 - 80 Gew.-% Calciumaluminatsilkate, als kristalline, wenig kristalline oder amorphe Phasen
- 1 - 80 Gew.-% Calciummagnesiumaluminatsilikate, als kristalline, wenig kristalline oder amorphe Phasen und
- bis zu 30 Gew.-% Spuren- und Nebenbestandteile, insbesondere C₅A₃, CA, Calciumoxid, γ-Aluminiumoxid und andere Aluminiumoxide, Quarz und/oder Kalkstein, CaO, Calciumsulfat, MgCO₃, Mg(OH)₂, Fe₃O₄, Eisensilikate wie Fe₂SiO₄, amorphe Eisen-haltige Phasen
wobei sich alle Anteile des Produkts auf 100 % summieren und die Summe von Calciumsilikaten, Calciumaluminaten, Calciumaluminiumsilikaten, Magnesiumsilikaten und Calciummagnesiumsilikaten mindestens 30 Gew.-%, vorzugsweise mindestens 50 Gew.-%, am meisten bevorzugt mindestens 70 Gew.-% beträgt.

Erfindungsgemäß eignet sich das nach der hydrothermalen Behandlung und dem Tempern erhaltene Produkt als Bindemittel, welches durch Reaktion mit Kohlendioxid erhärtet und stellt damit ein Material für die Absorption von Kohlendioxid dar. Das Material entwickelt bei der Reaktion mit Kohlendioxid analog zu Zement bei der Reaktion mit Wasser eine Festigkeit und kann daher anstelle von Zement verwendet werden

Nötigenfalls wird das Material auf eine gewünschte Feinheit gemahlen, wie es von der Zementherstellung an sich bekannt ist. Dieselben Vorrichtungen und auch Mahlhilfsmittel wie bei z.B. Portlandzement sind brauchbar. Die Feinheit beträgt üblicherweise von 2000 bis 10.000 cm²/g, insbesondere von 3000 bis 5000 cm²/g nach Blaine.

Ebenso analog zum Zement werden in der Regel Gesteinskörnungen zugefügt. Auch Zusatzstoffe und/oder Zusatzmittel sowie ggfs. Klinkerersatzmaterial wie Puzzolane und latent hydraulische Materialien können zugefügt werden.

Abweichend von Zement benötigt das Material keinen Wasserzusatz. Zur Einstellung der Konsistenz wird jedoch Wasser oder andere Flüssigkeiten, wie z.B. Alkohole, zugefügt.

Das Material wird dann zur Herstellung von Bauteilen in Formen gegossen oder als Mörtel oder Ortbeton verarbeitet.

Die Bauteile sind eine besonders bevorzugte Anwendung des Materials, da die Herstellung in einfacher Weise örtlich nahe von Anlagen, welche Kohlendioxid ausstoßen, anordenbar ist. Damit kann einerseits leicht eine hohe Konzentration an Kohlendioxid für ein schnelles Erhärten geschaffen werden. Andererseits entfallen Wege, um Kohlendioxid, welches aus dem Abgas solcher Anlagen gefiltert wurde, zu transportieren. Selbstverständlich ist es aber auch möglich, Kohlendioxid, welches irgendwo reversibel an ein Adsorbens gebunden wurde, durch Freisetzung aus dem Adsorbens am Ort der Verwendung des erfindungsgemäß erhaltenen Materials mit dem Material umzusetzen.

Ein besonderer Vorteil ist, dass die Erhärtung wesentlich rascher erfolgt, als bei Portlandzement, meist schon innerhalb eines Tages anstatt in 28 Tagen wie beim Portlandzement.

Nach der Erhärtung liegen vor allem Calcite, Silicagel, carbonatisierte Formen von Calciumaluminathydrat oder Calciumaluminiumsilikathydrat oder Magnesiumsilikathydrat oder Calciummagnesiumsilikathydrat oder Magnesium (Aluminium, Eisen)silikathydrat oder Magnesium (Calcium, Aluminium, Eisen)sili-kathydrat oder carbonatisierte Formen von Calciumsilikat, Calciumaluminat, Calciumaluminiumsilikat, Magnesium(calcium,aluminium,eisen)silikat oder Calciummagnesiumsilikat vor.

Besonders bevorzugt werden mit dem erfindungsgemäßen Verfahren Fertigteile für den Bau wie Wände, Decken, Platten, Pfosten, Pflastersteine, Schwellen, Dachpfannen usw. hergestellt.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiel 1

Aus Calciumhydroxid und kolloidalem Silica wurde unter Zusatz von Wasser in einem Wasser/Feststoffverhältnis von 2 eine Ausgangsmaterialmischung hergestellt, deren Molverhältnis Ca:Si 2 betrug. Die Mischung wurde 6 Stunden in einem Autoklaven bei 200 °C behandelt. Das Produkt wurde 1 Stunde bei 460°C getempert. Das Produkt enthielt 30,7 % C₂S (verschiedene Polymorphe), 5,1 % CaCO₃, 22,2 % Dellait, 2,6 % Afwillit und 39,4 % röntgenamorphe Phase.

Da die Rohstoffe bereits sehr fein waren, war keine Mahlung nötig. Um das Potential des Materials zur Umsetzung mit Kohlendioxid zu bestimmen wurden 5,5 g Produkt 72 Stunden in eine CO₂₋haltige Umgebung gebracht. Dazu wurden 0,94 g NaHCO₃ in 10 g Wasser gelöst und das Produkt in die Lösung getaucht. Die Konzentration an CO₂ betrug 4,9 %.

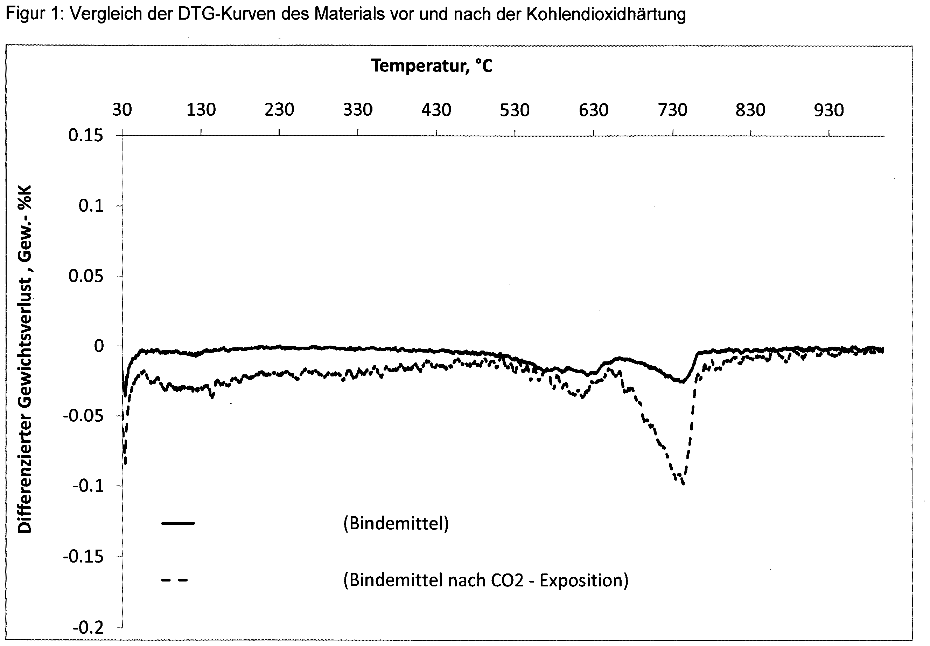

Von dem Material wurden vor und nach der Kohlendioxidhärtung Röntgenspektren aufgenommen und eine thermogravimetrische Analyse (DTG) durchgeführt. Die Messwerte in Tabelle 1 zeigen, dass die Abnahme des C₂S-Gehalts mit einer Zunahme der Bildung von Calcit einhergeht. Es wurde auch eine Zunahme des Gehalts der amorphen Phase gefunden. Die DTG-Kurven in Figur 1 belegen die Umwandlungen während der Kohlendioxidhärtung.

**Tabelle 1: Phasenzusammensetzung gemäß Röntgenspektrum**

| Phase | Material | Material nach CO₂-Härtung |
|---|---|---|
| CaCO₃ | 5,1 % | 17,9 % |
| C₂S | 30,7 % | 9,3 % |
| Dellait | 22,2 % | 16 % |
| Afwillit | 2,6 % | - |
| Tobermorit | - | 8,7 % |
| amorph | 39,4 % | 48,1 % |

## Patentansprüche

1. Verfahren zur Bindung von Kohlendioxid umfassend:
Bereitstellen eines Ausgangsmaterials, welches Quellen für CaO und SiO₂ umfasst,
hydrothermale Behandlung des Ausgangsmaterials in einem Autoklaven bei 50 bis 300 °C,
Tempern des durch hydrothermale Behandlung erhaltenen Materials bei 350 bis 600 °C
Zufügen von Wasser oder anderen Flüssigkeiten zur Einstellung der Konsistenz
in Formen Gießen zur Herstellung von Bauteilen oder Verarbeiten als Mörtel oder Ortbeton und
Härten des durch hydrothermale Behandlung und Tempern erhaltenen Materials durch Behandlung mit Kohlendioxid.

2. Verfahren gemäß Anspruch 1, **dadurch gekennzeichnet, dass** Calciumhydroxid oder -oxid, Quarzmehl, Microsilica, Bauxit, Ton / Tonstein, kalzinierte Tone (z.B. Metakaolin), Basalte, Peridotite, Dunite, Ignimbrite, Karbonatite, Aschen / Schlacken / Hüttensande, diverse Haldenmaterialien, Rot- und Braunschlämme, natürliche Sulfatträger, Entschwefelungsschlämme, Phosphogips, Rauchgasgips, Titanogips, Fluorogips, in geeigneter Kombination als Ausgangsmaterial verwendet werden.

3. Verfahren gemäß Anspruch 1 oder 2, **dadurch gekennzeichnet, dass** ein molares Ca:Si-Verhältnis im Ausgangsmaterial von 1,5 bis 2,5 eingestellt wird.

4. Verfahren gemäß einem der Ansprüche 1 bis 3, **dadurch gekennzeichnet, dass** das Ausgangsmaterial Quellen für Mg umfasst, wobei ein molares Verhältnis von Ca:Mg von 0,1 bis 100, vorzugsweise von 0,2 bis 20, besonders bevorzugt von 0,5 bis 5, eingestellt wird.

5. Verfahren gemäß einem der Ansprüche 1 bis 4, **dadurch gekennzeichnet, dass** das Ausgangsmaterial Quellen für Al und/oder Fe umfasst, wobei ein molares Verhältnis (Al+Fe)/Si von 100 bis 0,1 eingestellt wird.

6. Verfahren gemäß Anspruch 4 und 5, **dadurch gekennzeichnet, dass** ein molares (Ca+Mg)/(Si+Al+Fe)-Verhältnis von 1 bis 3,5, vorzugsweise von 1,5 bis 2,5, besonders bevorzugt von etwa 2, eingestellt wird.

7. Verfahren gemäß einem der Ansprüche 1 bis 6, **dadurch gekennzeichnet, dass** die Ausgangsmaterialmischung vor der hydrothermalen Behandlung mit 0,01 - 30 Gew.-% Kristallisationskeimen, die beispielsweise Calciumsilikathydrat, Portlandklinker, Hüttensand, Magnesiumsilikat, Calciumsulfataluminat(belit)zement, Wasserglas, und/oder Glaspulver enthalten, geimpft wird.

8. Verfahren gemäß einem der Ansprüche 1 bis 7, **dadurch gekennzeichnet, dass** die hydrothermale Behandlung bei einer Temperatur von 100 bis 300 °C, bevorzugt von 150 °C bis 250 °C, erfolgt.

9. Verfahren gemäß einem der Ansprüche 1 bis 8, **dadurch gekennzeichnet, dass** die hydrothermale Behandlung bei einem Wasser/Feststoff-Verhältnis von 0,1 bis 100, bevorzugt von 2 bis 20 erfolgt.

10. Verfahren gemäß einem der Ansprüche 1 bis 9, **dadurch gekennzeichnet, dass** für die hydrothermale Behandlung Verweilzeiten von 0,1 bis 24 Stunden, bevorzugt von 1 bis 16 Stunden, eingestellt werden.

11. Verfahren gemäß einem der Ansprüche 1 bis 10, **dadurch gekennzeichnet, dass** während des Temperns beim Aufheizen eine zusätzliche Haltezeit bei 400 bis 440 °C von 1 bis 120 min. vorgesehen wird.

12. Verfahren gemäß Anspruch 11, **dadurch gekennzeichnet, dass** die Aufheizrate bei der Temperung von 10 - 6000 °C/min, bevorzugt von 20 - 100 °C/min und besonders bevorzugt etwa 40 °C/min, beträgt.

13. Verfahren gemäß Anspruch 11 oder 12, **dadurch gekennzeichnet, dass** die Verweilzeit bei der Temperung von 0,01 - 600 min, bevorzugt von 1 - 120 min und besonders bevorzugt von 5 - 60 min, beträgt.

14. Verfahren gemäß einem der Ansprüche 1 bis 13, **dadurch gekennzeichnet, dass** das Material vor der Härtung auf eine Feinheit von 2000 bis 10.000 cm²/g, insbesondere von 3000 bis 5000 cm²/g, nach Blaine gemahlen wird.

15. Verfahren gemäß einem der Ansprüche 1 bis 14, **dadurch gekennzeichnet, dass** das Material vor der Härtung mit einer Flüssigkeit, insbesondere mit Wasser, zu einer Paste angemacht und geformt wird.

16. Verfahren gemäß einem der Ansprüche 1 bis 15, **dadurch gekennzeichnet, dass** das Material vor der Härtung mit Gesteinskörnungen vermischt wird.

17. Verfahren gemäß einem der Ansprüche 1 bis 16, **dadurch gekennzeichnet, dass** das Material vor der Härtung mit Zusatzstoffen und/oder Zusatzmitteln sowie ggfs. Klinkerersatzmaterial vermischt wird.

18. Verfahren zur Herstellung eines Bauteils durch Härten eines Materials mit Kohlendioxid in einem Verfahren gemäß einem der Ansprüche 1 bis 17.

19. Verfahren gemäß Anspruch 18, **dadurch gekennzeichnet, dass** das Bauteil ein Fertigteil für den Bau, insbesondere eine Wand, eine Decke, eine Platte, ein Pfosten, ein Pflasterstein, eine Schwelle oder eine Dachpfanne ist.

20. Verwendung eines Materials, erhältlich durch hydrothermale Behandlung des Ausgangsmaterials, welches Quellen für CaO und SiO₂ umfasst, in einem Autoklaven bei 50 bis 300 °C und Tempern des durch hydrothermale Behandlung erhaltenen Materials bei 350 bis 600 °C zur Bindung von Kohlendioxid durch
Zufügen von Wasser oder anderen Flüssigkeiten zur Einstellung der Konsistenz
in Formen gießen zur Herstellung von Bauteilen oder Verarbeiten als Mörtel oder Ortbeton und
Härten des durch hydrothermale Behandlung und Tempern erhaltenen Materials durch Behandlung mit Kohlendioxid.

## Claims

1. Method of binding carbon dioxide, comprising:
providing a starting material which comprises sources of CaO and SiO₂,
hydrothermal treatment of the starting material in an autoclave at 50 to 300 °C,
tempering the material obtained by hydrothermal treatment at 350 to 600 °C,
adding water or other liquids to adjust consistency
casting in moulds for the production of building elements or processing as mortar or in-situ concrete, and
hardening of the material obtained by hydrothermal treatment and tempering by treatment with carbon dioxide.

2. Method according to claim 1, **characterised in that** calcium hydroxide or oxide, quartz powder, microsilica, bauxite, clay / claystone, calcined clays (for example metakaolin), basalts, peridotites, dunites, ignimbrites, carbonatites, ashes / slags / ground granulated blast furnace slags, various stockpile materials, red and brown muds, natural sulphate carriers, desulphurisation muds, phosphogypsum, flue gas gypsum, titanogypsum, fluorogypsum in a suitable combination are used as starting material.

3. Method according to claim 1 or 2, **characterised in that** a molar Ca:Si ratio in the starting material is set to be from 1.5 to 2.5.

4. Method according to one of claims 1 to 3, **characterised in that** the starting material comprises sources of Mg, wherein a molar ratio of Ca:Mg is set to be from 0.1 to 100, preferably from 0.2 to 20, particularly preferred from 0.5 to 5.

5. Method according to one of claims 1 to 4, **characterised in that** the starting material comprises sources for Al and/or Fe, wherein a molar ratio (Al+Fe)/Si is set to be from 100 to 0.1.

6. Method according to claims 4 and 5, **characterised in that** a molar (Ca+Mg)/(Si+AI+Fe) ratio is set to be from 1 to 3.5, preferably from 1.5 to 2.5, particularly preferred around 2.

7. Method according to one of claims 1 to 6, **characterised in that** the starting material mixture is seeded with 0.01 to 30% by weight of seed crystals, which for example contain calcium silicate hydrate, Portland clinker, ground granulated blast furnace slag, magnesium silicate, calcium sulfoaluminate (belite) cement, water glass, and/or glass powder.

8. Method according to one of claims 1 to 7, **characterised in that** the hydrothermal treatment is carried out at a temperature of from 100 to 300 °C, preferably from 150 to 250 °C.

9. Method according to one of claims 1 to 8, **characterised in that** the hydrothermal treatment is carried out at a water/solid ratio of from 0.1 to 100, preferably from 2 to 20.

10. Method according to one of claims 1 to 9, **characterised in that** residence times of from 0.1 to 24 hours, preferably of from 1 to 16 hours, are set for the hydrothermal treatment.

11. Method according to one of claims 1 to 10, **characterised in that**, during the tempering, an additional holding time during heating of from 1 to 120 minutes at 400 to 440 °C is provided.

12. Method according to claim 11, **characterised in that** the heating rate during tempering is from 10 to 6000 °C/min, preferably from 20 to 100 °C/min, and particularly preferred about 40 °C/min.

13. Method according to claim 11 or 12, **characterised in that** the residence time during the tempering is from 0.01 to 600 minutes, preferably from 1 to 120 minutes and particularly preferred from 5 to 60 minutes.

14. Method according to one of claims 1 to 13, **characterised in that** the material is ground to a fineness of 2000 to 10,000 cm²/g, in particular from 3000 to 5000 cm²/g, measured according to Blaine prior to hardening.

15. Method according to one of claims 1 to 14, **characterised in that** the material is mixed with a fluid, in particular with water, and shaped into a paste prior to hardening.

16. Method according to one of claims 1 to 15, **characterised in that** the material is mixed with aggregates prior to hardening.

17. Method according to one of claims 1 to 16, **characterised in that** the material is mixed with additives and/or admixtures, as well as optionally with supplementary cementitious material, prior to hardening.

18. Method for manufacturing a building element by hardening a material with carbon dioxide in a method according to one of claims 1 to 17.

19. Method according to claim 18, **characterised in that** the building element is a prefabricated part for construction, in particular a wall, a ceiling, a plate, a post, a paving stone, a sleeper or a roof tile.

20. Use of a material obtainable by by hydrothermal treatment of the starting material comprising sources of CaO and SiO₂ in an autoclave at 50 to 300 °C and tempering the material obtained by hydrothermal treatment at 350 to 600 °C
to bind carbon dioxide by
adding water or other liquids to adjust the consistency
casting into moulds for the production of building elements or processing as mortar or in-situ concrete, and
hardening the material obtained by hydrothermal treatment and tempering by treatment with carbon dioxide.

## Revendications

1. Procédé d'absorption de dioxyde de carbone, comprenant:
la mise à disposition d'un matériau de départ comprenant des sources de CaO et de SiO₂,
le traitement hydrothermal dudit matériau de départ dans un autoclave à 50 à 300 °C,
le traitement thermique du matériel tel qu'obtenu par ledit traitement hydrothermal, à 350 à 600 °C
l'ajout d'eau ou d'autres liquides afin d'ajuster la consistance
la coulée, dans des moules, afin de fabriquer des pièces de construction ou la mise en œuvre en tant que mortier ou béton coulé sur place, et
la prise du matériau tel qu'obtenu par ledit traitement hydrothermal et ledit traitement thermique, en réalisant un traitement au dioxyde de carbone.

2. Procédé selon la revendication 1, **caractérisé en ce que** l'on utilise, en tant que matériau de départ, de l'hydroxyde ou de l'oxyde de calcium, de la poudre de quartz, de la silice micronisée, de la bauxite, de l'argile / de la roche argileuse, des argiles calcinées (par exemple, du méta-kaolin), des basaltes, des péridotites, des dunites, des ignimbrites, des carbonatites, des cendres / des scories / du laitier granulé, différents résidus d'activités extractives, des boues rouges et marron, des sources naturelles de sulfate, des boues issues de la désulfurisation, du phosphogypse, du gypse issu du traitement des fumées, du titanogypse, du fluorogypse, dans une combinaison appropriée.

3. Procédé selon les revendications 1 ou 2, **caractérisé en ce que**, dans le matériau de départ, on ajuste le rapport molaire de Ca:Si de manière à ce qu'il soit de 1,5 à 2,5.

4. Procédé selon l'une des revendications 1 à 3, **caractérisé en ce que** le matériau de départ comprend des sources de Mg, le rapport molaire de Ca:Mg étant ajusté de manière à ce qu'il soit de 0,1 à 100, de préférence de 0,2 à 20, avec une préférence particulière de 0,5 à 5.

5. Procédé selon l'une des revendications 1 à 4, **caractérisé en ce que** le matériau de départ comprend des sources de Al et/ou de Fe, le rapport molaire de (Al + Fe)/Si étant ajusté de manière à ce qu'il soit de 100 à 0,1.

6. Procédé selon les revendications 4 et 5, **caractérisé en ce que** l'on ajuste le rapport molaire de (Ca+Mg)/(Si+Al+Fe) de manière à ce qu'il soit de 1 à 3,5, de préférence de 1,5 à 2,5, avec une préférence particulière égal à environ 2.

7. Procédé selon l'une des revendications 1 à 6, **caractérisé en ce qu'**au préalable dudit traitement hydrothermal, on ajoute au mélange des matériaux de départ entre 0,01 et 30 % en poids de germes de cristallisation contenant, par exemple, du silicate de calcium hydraté, du clinker de Portland, du laitier granulé, du silicate de magnésium, du ciment sulfo-alumineux (bélitique), du verre soluble et/ou de la poudre de verre.

8. Procédé selon l'une des revendications 1 à 7, **caractérisé en ce que** ledit traitement hydrothermal est réalisé à une température de 100 à 300 °C, de préférence de 150 °C à 250 °C.

9. Procédé selon l'une des revendications 1 à 8, **caractérisé en ce que** ledit traitement hydrothermal est réalisé à un rapport eau/matières solides de 0,1 à 100, de préférence de 2 à 20.

10. Procédé selon l'une des revendications 1 à 9, **caractérisé en ce que**, pour ledit traitement hydrothermal, on ajuste la durée de séjour de 0,1 à 24 heures, de préférence de 1 à 16 heures.

11. Procédé selon l'une des revendications 1 à 10, **caractérisé en ce qu'**au cours dudit traitement thermique, la montée en température comporte, à 400 à 440 °C, un palier supplémentaire qui est maintenu pendant 1 à 120 min.

12. Procédé selon la revendication 11, **caractérisé en ce que**, lors dudit traitement thermique, la vitesse de montée en température est de 10 à 6 000 °C/min, de préférence de 20 à 100 °C, et s'élève, avec une préférence particulière, à environ 40 °C/min.

13. Procédé selon les revendications 11 ou 12, **caractérisé en ce que**, lors dudit traitement thermique, la durée de séjour est de 0,01 à 600 min, de préférence de 1 à 120 min et, avec une préférence particulière, de 5 à 60 min.

14. Procédé selon l'une des revendications 1 à 13, **caractérisé en ce qu'**au préalable de la prise, ledit matériau est broyé de manière à ce qu'il présente, selon le test de Blaine, une finesse de 2 000 à 10 000 cm²/g, notamment de 3 000 à 5 000 cm²/g.

15. Procédé selon l'une des revendications 1 à 14, **caractérisé en ce qu'**au préalable de la prise, ledit matériau est gâché avec un liquide, notamment avec de l'eau, pour obtenir une pâte laquelle est mise en forme.

16. Procédé selon l'une des revendications 1 à 15, **caractérisé en ce qu'**au préalable de la prise, ledit matériau est mélangé à des granulats.

17. Procédé selon l'une des revendications 1 à 16, **caractérisé en ce qu'**au préalable de la prise, ledit matériau est mélangé avec des additifs et/ou des adjuvants ainsi que, les cas échéant, des substituts de clinker.

18. Procédé de fabrication d'une pièce de construction en provoquant la prise d'un matériau à l'aide de dioxyde de carbone dans un procédé selon l'une des revendications 1 à 17.

19. Procédé selon la revendication 18, **caractérisé en ce que** ladite pièce de construction est une pièce préfabriquée destinée à la construction, s'agissant notamment d'une paroi, d'un plafond, d'une plaque, d'un poteau, d'un pavé, d'une traverse ou d'une tuile de toiture.

20. Utilisation d'un matériau pouvant être obtenu en soumettant ledit matériau de départ comprenant des sources de CaO et de SiO₂, à un traitement hydrothermal dans un autoclave à 50 à 300 °C et en soumettant le matériau obtenu par ledit traitement hydrothermal à un traitement thermique à 350 à 600 °C, pour absorber du dioxyde de carbone, en réalisant ce qui suit l'ajout d'eau ou d'autres liquides afin d'ajuster la consistance
la coulée, dans des moules, afin de fabriquer des pièces de construction ou la mise en œuvre en tant que mortier ou béton coulé sur place, et
la prise du matériau tel qu'obtenu par ledit traitement hydrothermal et ledit traitement thermique, en réalisant un traitement au dioxyde de carbone.
